(19) Europäisches Patentamt
European Patent Office
Office européen des brevets

(11) **EP 4 776 097 A1**

(12) **EUROPEAN PATENT APPLICATION**

(43) Date of publication:
**15.07.2026 Bulletin 2026/29**

(21) Application number: **25151728.0**

(22) Date of filing: **14.01.2025**

(51) International Patent Classification (IPC):
**G06E 3/00** $^{(2006.01)}$ **G06N 3/067** $^{(2006.01)}$

(52) Cooperative Patent Classification (CPC):
**G06E 3/005;** G06N 3/0675

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Ludwig-Maximilians-Universität München**
**80539 München (DE)**

(72) Inventors:
• **Vadia, Samarth**
**80799 Munich (DE)**

• **Förste, Jonathan**
**80805 Munich (DE)**
• **Baimuratov, Anvar**
**80799 Munich (DE)**
• **Maly, Johannes**
**85051 Ingolstadt (DE)**
• **Bacho, Aras**
**80809 Munich (DE)**

(74) Representative: **Hofstetter, Schurack & Partner**
**Patent- und Rechtsanwaltskanzlei**
**PartG mbB**
**Balanstraße 73 / Haus 31A**
**81541 München (DE)**

(54) **COMPUTING SYSTEM AND METHOD FOR CONTINUOUS-VALUE COMPUTING OR PARTLY CONTINUOUS-VALUE COMPUTING**

(57) A computing system (1) comprises a plurality of channels (15a, 15b, 15c, 15d, 15e, 15f, 15g), wherein each channel comprises a waveguide, and a data encoding module (3) to encode input data (4) in a representation, which comprises complex values, to generate a signal for each channel (15a, 15b, 15c, 15d, 15e, 15f, 15g) depending on the complex values, and to couple the signals into the waveguides. The computing system (1) comprises processing modules (5, 6, 7a, 7b) for manipulating the signals when propagating along the waveguides, including a first module (5), which implements a mathematical operation and a second module (6), which implements a control operation for controlling a further processing of the signals.

Fig.1

**Description**

The present invention is directed to a computing system for continuous-value computing or partly continuous-value computing and to a corresponding method for continuous-value computing or partly continuous-value computing.

Computing in the modern era is mainly based on digital logic, where every complex operation at its core is composed of electronically controlled transistors that switch between an on- and off-state. These binary switches can be linked to form logical gates which can then perform mathematical operations on numbers that are encoded appropriately. For example, a simple binary addition can be realized with the Boolean operations of AND and XOR, that can be realized with a total of six transistors. This operation is one of many instructions for a digital computer that form a so-called instruction set that defines a computer architecture on an abstract level.

As was shown by Alan Turing through his famous Turing Machine, combining basic instructions can yield a universal computer that can implement any computing algorithm. It is however merely a theoretical model and real computers are built on equally universal but different concepts. There exist two dominant design philosophies for these architectures today, the complex instruction set computer (CISC) architecture, for example Intel's x86, and the reduced instruction set computer (RISC) architecture, for example ARM and RISC-V, that are defined by the scope of their instructions, with RISC including fewer basic operations while a CISC architecture contains complex variable length instructions. However, in these and other digital architectures, the arithmetic instructions are limited to a small group of addition, subtraction, multiplication and division operations.

An entirely different computing philosophy is given by analog computing, which relies on a continuous physical quantity to model the computation. The most prominent example is given by electronic analog computers with resistors, inductors, capacitors and operational amplifiers as base components that can be used for analog operations, such as addition, subtraction and integration, forming the instruction set. Before digital machines became as powerful as they are today, analog computers were regularly employed for certain calculations such as solving differential equations. There are several hardware systems that can perform computations in the analog domain, two most popular approaches are the electronic and the optical approach. Analog computers can perform complex calculations with available instructions but at the cost of accuracy and noise due to repeated processing of signals. Analog computing may also be denoted as continuous-value computing. A combination of partly analog and partly digital computing may be denoted as partly continuous-value computing.

In the last decades, digital computing has become the dominant paradigm as the miniaturization of transistors resulted in its exponential improvement with regards to speed and efficiency. But despite their success, they are slowly reaching their limitations as Moore's and Dennard's scaling reach a fundamental limit coinciding with immense time and energy costs due to memory shuffling known as the von Neumann bottleneck. There exists a wide class of problems for which digital machines, even scaled to the size of clusters or datacenters, become impractical. Many of these problems relate to the simulation of physical systems found in nature, such as cells or climate, which currently requires supercomputers. The employed models evolve to be both more accurate and more complex while the computational cost is only getting higher. Solving such problems efficiently is crucial for drug discovery, material development, chemistry as well as climate change modeling.

W. R. Clements et al.: "Optimal design for universal multiport interferometers", Optica Vol. 3, Issue 12, pp. 1460-1465 (2016) describes a concept for universal multiport interferometers, which can be programmed to implement any linear transformation between multiple channels. M. Reck et al.: "Experimental realization of any discrete unitary operator", Phys. Rev. Lett. 73, 58 provides an algorithmic proof that any discrete finite-dimensional unitary operator can be constructed in the laboratory using optical devices.

It is an objective of the present invention to provide an improved concept for continuous-value computing or partly continuous-value computing.

This objective is achieved by the respective subject of the independent claims. Preferred embodiments and further implementations are subject matter of the dependent claims.

According to an aspect of the invention, a computing system for continuous-value computing or partly continuous-value computing is provided. The computing system comprises a plurality of channels, wherein each channel comprises a waveguide. The computing system comprises a data encoding module, which is configured to encode predefined input data in a representation, which comprises a set of complex values, and to generate a respective signal for each channel of the plurality of channels. This results in a set of signals, wherein each signal of the set of signals comprising a wave, for example a wave packet, with an amplitude spectrum and/or a frequency spectrum and/or a phase spectrum and/or a polarization spectrum depending on a respective subset of the set of complex values. The data encoding module is configured to couple each signal of the set of signals into the waveguide of the respective channel, in particular at an input side or an input terminal of the respective waveguide or the respective channel.

The computing system comprises a plurality of processing modules, which are coupled to the plurality of channels such that the set of signals is manipulated by the plurality of processing modules when propagating along the waveguides. The plurality of processing modules comprises a first module, which is configured to receive a first subset of at least one signal from at least one of the channels and to generate at least one manipulated signal, which is related to the first subset of at least one signal according to a predefined mathematical operation implemented by the first module. The plurality of processing modules comprises a second module, which is configured to receive a second subset of at least one signal from at least one of the channels and to control a further processing of the set of signals according to a predefined control operation, which is implemented by the second module.

The waves or wave packets, respectively, may be different types of waves in the respective physical medium of the waveguides. It is noted that the expression wave is understood in a broad sense here and in the following such that not only plane waves or other individual waves are covered but also wave packets.

For example, the waves may be electromagnetic waves in the optical domain or, in other words, light waves. The waveguides are optical waveguides in this case, for example optical fibers. The optical domain may be understood to comprise electromagnetic waves in the visible range, in the infrared range and/or in the ultraviolet range. In other words, the optical domain comprises for example a wavelength range of [380 nm, 750 nm] in the visible domain, and/or of [1300nm, 1700nm] in the near infrared domain.

In other embodiments, the waves may be electromagnetic waves in the radio-frequency, RF, domain, that is in a frequency range of [20 kHz, 300 GHz]. The waveguides are RF-waveguides in this case, for example coaxial cables.

In other embodiments, the waves may be mechanical waves in a fluid, for example in a liquid or acoustic waves in a gaseous medium. The waveguides are for example pipes containing the fluid in this case.

Consequently, the encoding of the input data and the manipulation of the signals may comprise different techniques depending on the physical implementation of the waves. In particular, encoding or manipulating a signal may comprise defining or modifying an amplitude and/or phase and/or frequency and/or polarization of the respective waves or an amplitude spectrum and/or phase spectrum and/or frequency spectrum and/or polarization spectrum of the respective wave packets.

For example, in case of optical waves, their amplitudes may for example be defined or modified by means of interferometric phase modulation and/or by means of adjusting a drive current of a light source generating the optical waves or by direct encoding during the generation of the waves, for example in a laser gain medium, which corresponds to an external electronic modulation of the amplitudes. The phase modulation is for example carried out by modulating material properties of the waveguides, such as length, diameter, or by refractive index modulation. For example, Mach-Zehnder type interferometer arrangements, ring-type interferometer arrangements or Sagnac-type interferometer arrangements may be used. The phases may for example be defined or modified by changing the length and/or refractive index of the respective waveguide or, in other words, by changing the optical path length of the respective waveguide. The frequencies may for example be defined or modified by utilizing diffractive or resonator components to individually address frequency units. The polarizations may for example be defined or modified by introducing or modifying birefringence in the waveguides.

For example, in case of RF-waves, their amplitudes may for example be defined or modified by applying a respective voltage to an antenna or a cable. The phases may for example be defined or modified by providing two signals with differential amplitudes into a waveguide. The frequencies may for example be defined or modified by feeding the signals into an electronic oscillator. The polarizations may for example be defined or modified by manipulating antenna orientations and/or antenna designs.

For example, in case of fluid waves, their amplitudes may for example be defined or modified by changing the transverse physical dimension of the waveguides. The phases may for example be defined or modified by changing the longitudinal physical dimensions of the waveguides. The frequencies may for example be defined or modified by means of external valves or pumps.

For example, in case of acoustic waves, their amplitudes may for example be defined or modified by changing a physical movement of an object inside the waveguide. Similarly, the phases may be defined or modified but with a differential movement of two or more objects. The frequencies may for example be defined or modified by introducing different physical oscillators such as springs or oscillating membranes. The polarizations may for example be defined or modified by introducing a shear response with oscillators.

In some embodiments, the second subset comprises the first subset completely or partially. In other embodiments, the first subset and the second subset are disjoint.

According to several embodiments, the computing system comprises a photonic chip, which comprises the plurality of processing modules, and each signal of the set of signals comprises a light wave, for example a wave packet of light waves.

According to several embodiments, in order generate the at least one manipulated signal, the first module is configured to modify the respective amplitude spectra of the first subset of at least one signal by carrying out an interferometric phase modulation of the respective amplitude spectra and/or an external electronic modulation.

According to several embodiments, in order generate the at least one manipulated signal, the first module is configured to modify the respective phase spectra of the first subset of at least one signal by adjusting an optical path length of a medium, in particular of the first module, through which the first subset of at least one signal propagates.

For adjusting the optical path length, a geometrical path length and/or a refractive index of the medium may be adjusted. For example, that several alternative optical paths with different geometrical path lengths and/or refractive indices may be provided.

According to several embodiments, in order generate the at least one manipulated signal, the first module is configured to modify a polarization of the first subset of at least one signal by providing a birefringent element through which the first subset of at least one signal propagates.

According to several embodiments, for each signal of the set of signals, the respective wave comprises an electromagnetic RF-wave, in particular RF-wave packet, or a pressure wave, in particular wave packet, in a fluid medium or an acoustic wave, in particular wave packet, or an ultrasonic wave, in particular wave packet.

According to several embodiments, the computing system comprises a data decoding module, which is configured to generate output data by decoding the set of signals manipulated by the plurality of processing modules.

For example, the data encoding module and the data decoding module may be combined in a data encoding and decoding module.

According to several embodiments, the mathematical operation, which is implemented by the first module, comprises at least one arithmetic operation and/or at least one trigonometric operation and/or at least one linear transformation and/or at least one matrix multiplication and/or at least one logic operation.

According to several embodiments, the control operation, which is implemented by the second module, comprises a routing or re-routing of at least a part of the set of signals.

According to several embodiments, the control operation, which is implemented by the second module, comprises a jump operation and/or a halt operation and/or a delay operation and/or a data storage operation and/or a data retrieval operation.

According to several embodiments, the first subset of at least one signal is identical to the second subset of at least one signal. The second module is configured to determine a current number of times the first subset of at least one signal has already been manipulated by the first module and to route the first subset of at least one signal to be manipulated by the first module if the current number is less than a predefined iteration number. For example the control operation is implemented by the second module comprises determining the current number of times the first subset of at least one signal has already been manipulated by the first module and routing the first subset of at least one signal to be manipulated by the first module if the current number is less than a predefined iteration number.

According to several embodiments, the first module is configured to generate a set of digital signals depending on the first subset of at least one signal and carry out a computation according to the predefined mathematical operation based on the set of digital signals and store a result of the computation. For example the control operation implemented by the first module comprises generating a set of digital signals depending on the first subset of at least one signal and carrying out a computation according to the predefined mathematical operation based on the set of digital signals and storing a result of the computation

According to several embodiments, the first module is configured to manipulate the set of digital signals according to the predefined mathematical operation and convert the manipulated set of digital signals into a manipulated set of signals.

According to a further aspect of the invention, a method for continuous-value computing or partly continuous-value computing is provided. Therein, a computing system is provided, for example a computing system according to the invention. The computing system comprises a plurality of channels, wherein each channel comprises a waveguide, and a plurality of processing modules. Predefined input data is encoded in a representation, which comprises a set of complex values and a respective signal is generated for each channel of the plurality of channels, which results in a set of signals. Each signal of the set of signals comprising a wave with an amplitude spectrum and/or a frequency spectrum and/or a phase spectrum and/or a polarization spectrum, depending on a respective subset of the set of complex values. Each signal of the set of signals is coupled into the waveguide of the respective channel. The set of signals is manipulated by the plurality of processing modules when propagating the set of signals along the waveguides. A first subset of at least one signal from at least one of the channels is received by a first module of the plurality of processing modules and at least one manipulated signal is generated by the first module, which is related to the first subset of at least one signal according to a predefined mathematical operation implemented by the first module. A second subset of at least one signal from at least one of the channels is received by a second module of the plurality of processing modules and a further processing of the set of signals is controlled by the second module according to a predefined control operation, which is implemented by the second module.

Further embodiments of the method according to the invention follow directly from the various embodiments of the computing system according to the invention and vice versa. In particular, individual features and corresponding explanations as well as advantages relating to the various embodiments of the computing system according to the invention can be transferred analogously to corresponding embodiments of the method according to the invention. In particular, the computing system according to the invention is designed or programmed to carry out the method according to the invention. In particular, the computing system according to the invention carries out the method according to the invention.

Further features of the invention are apparent from the claims, the figures and the figure description. The features and combinations of features mentioned above in the description as well as the features and combinations of features mentioned below in the description of figures and/or shown in the figures may be comprised by the invention not only in the respective combination stated, but also in other combinations. In particular, embodiments and combinations of features, which do not have all the features of an originally formulated claim, may also be comprised by the invention. Moreover, embodiments and combinations of features, which go beyond or deviate from the combinations of features set forth in the recitations of the claims may be comprised by the invention.

In the following, the invention will be explained in detail with reference to specific exemplary implementations and respective schematic drawings. In the drawings, identical or functionally identical elements may be denoted by the same reference signs. The description of identical or functionally identical elements is not necessarily repeated with respect to different figures.

In the figures,

Fig. 1    shows a schematic block diagram of an exemplary embodiment of a computing system according to the invention;

Fig. 2    shows a schematic block diagram of a further exemplary embodiment of a computing system according to the invention;

Fig. 3    shows a schematic block diagram of channels of a further exemplary embodiment of a computing system according to the invention;

Fig. 4    shows scheme notations for non-multiplex-channel operations;

Fig. 5    shows an illustration of a subtraction gate;

Fig. 6    shows an illustration of an algorithm to multiply a matrix to an input vector based on singular value decomposition;

Fig. 7    shows an illustration of a unitary operation;

Fig. 8    shows an illustration of a Fourier neural operator;

Fig. 9    shows an illustration of a Fourier layer for a neural network; and

Fig. 10   shows an illustration of a graph optimizer algorithm.

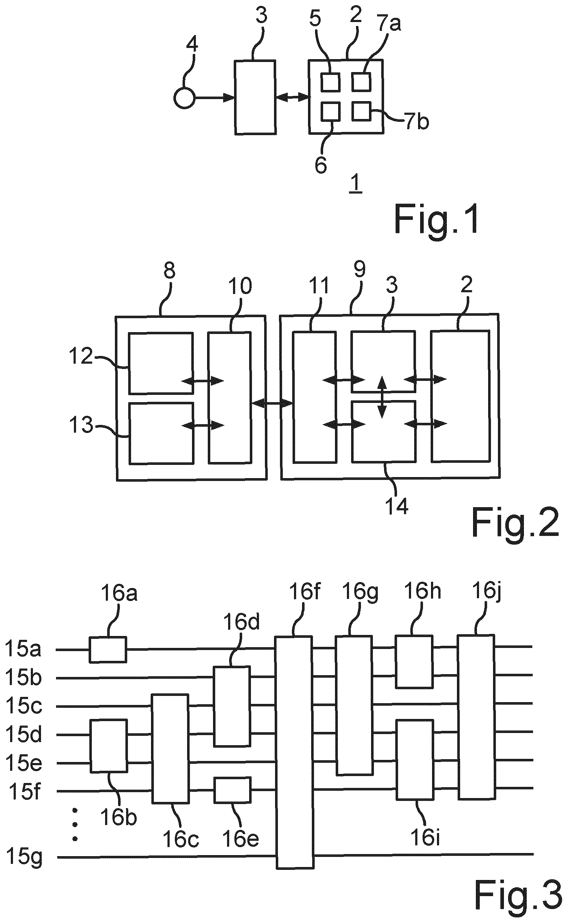

Fig. 1 shows a schematic block diagram of an exemplary embodiment of a computing system **1** according to the invention. The computing system **1** comprises a plurality of channels **15a, 15b, 15c, 15d, 15e, 15f, 15g,** (see Fig. 3), wherein each channel comprises a waveguide.

The waveguides are, in particular, implemented on a data processing device **2** for continuous-value computing, in particular analog computing. The data processing device **2** may for example comprise or consist of a photonic chip. In this case, the waveguides may for example be implemented as optical fibers or planar optical waveguides and so forth.

The computing system **1** comprises a data encoding module **3,** which is configured to encode predefined input data **4** in a representation, which comprises a set of complex values, and to generate a respective signal for each of the plurality of channels **15a, 15b, 15c, 15d, 15e, 15f, 15g.** In this way, a set of signals is generated, one in each waveguide. Each of the set of signals comprises a wave with an amplitude spectrum and a frequency spectrum and, in particular, a phase spectrum and/or polarization spectrum, depending on a respective subset of the set of complex values. The data encoding module **3** is configured to couple each of the set of signals into the waveguide of the respective channel.

The computing system **1** comprises a plurality of processing modules **5, 6, 7a, 7b,** in particular implemented on the data processing device **2**. The processing modules **5, 6, 7a, 7b** are coupled to the channels **15a, 15b, 15c, 15d, 15e, 15f, 15g,** such that the set of signals is manipulated by the plurality of processing modules **5, 6, 7a, 7b** when propagating along the waveguides.

A first module **5** of the plurality of processing modules **5, 6, 7a, 7b** is configured to receive a first subset of at least one signal from at least one of the channels **15a, 15b, 15c, 15d, 15e, 15f, 15g** and to generate at least one manipulated signal, which is related to the first subset of at least one signal according to a predefined mathematical operation implemented by the first module **5**. A second module **6** of the plurality of processing modules **5, 6, 7a, 7b** is configured to receive a second subset of at least one signal from at least one of the channels **15a, 15b, 15c, 15d, 15e, 15f, 15g** and to control a further processing of the set of signals according to a predefined control operation, which is implemented by the second module **6.**

Fig. 2 shows a schematic block diagram of a further exemplary embodiment of a computing system **1** according to the invention, which is based on the computing system **1** of Fig. 1.

The computing system **1** is separated in two blocks, namely a host computer **8,** which may be a general purpose, in particular digital, computer, and a processor **9,** which comprises the data processing device **2,** which may also be denoted as instruction engine **2,** and the data encoding module **3,** which is implemented as a data encoding and decoding module **3** in this embodiment. The processor **9** also comprises a local memory **14,** which can be accessed by the data encoding and decoding module **3** and by the instruction engine **2,** and an interface **11** coupling the processor **9** to the host computer **8,** in particular via a further interface **10** of the host computer **8.** In particular, the further interface **10** is coupled to the local memory **14** and the data encoding and decoding module **3** via the interface **11.** The host computer **8** further comprises a control unit **12** and a memory **13,** both coupled to the data processing device **2** via the interface **11** and the further interface **10.**

The computing system **1** establishes a wavefront analog instruction set, which is implemented on the instruction engine **2,** based on operations and transformations available in natural systems. This includes linear and non-linear operations that compute information in a one-step process and mathematically describe the function together with their input and output data forms. Operations with one or two inputs include analog arithmetic operations and trigonometric transformations. More complex transformations with large data inputs include two-dimensional special unitary transformations, SU(2) transformation, and higher-dimensional matrix multiplications as well as a set of transformations related to convolution and the Fourier transform. Also included in the instruction set are specialized instructions such as an analog implementation of a physical unclonable function, PUF.

Apart from mathematical instructions including logical instructions, the instruction set is complemented with control instruction, such as data transfer instructions for handling information in the analog and mixed analog-digital domain. A reduction in resource requirements for the analog instruction set may be achieved by utilizing complex mathematical operations instead of a set of Boolean logic operations.

As an example, a list of instructions that may be used in algorithms across all disciplines with comparison of theoretical resource consumption in the analog and digital domain is provided in the following table. In addition, a comparison of resources used in an analog photonic implementation is provided to demonstrate practical speedup and resource reduction. The expected advantages in terms of both time and memory complexity using an analog instruction set are vast in scope.

| I nstructio n | Analog instruction set | | | Digital instruction set | | |
|---|---|---|---|---|---|---|
| | Time complexit y | Space complexit y | Physical performanc e | Time complexit y | Space complexit y | Physical performanc e |
| DFT | 1 | $O(n)$ | 0.1 nJ, 5 ms | $O(n \log(n) M(b))$ | $O(n \log(n) b)$ | 10J, 200 ms |
| SU(2) matrix | 11 | 4 | 40 fJ, 4 ps | $4 M(b)$ | 4 | 50 pJ, 1ns |
| sine | 1 | $O(1)$ | 10 fJ, 1ps | $O(M(b))$ | $O(b)$ | 10 pJ, 1ns |

The table compares the analog instruction set architecture to a digital instruction set architecture. The performance is compared for three instructions: the specialized unitary transformation SU(2), the discrete Fourier transform, DFT, and the sine function. The theoretical performance is given in terms of the time and space complexity. n refers to the number of variables, b refers to the bit precision, and $M(b) = b \log(b)$ is the additional time complexity factor due to the bit precision. State-of-the-art computation chips such as TPU offer an 8-bit precision, that is $b = 8$, $M(b) = 7$, which is achievable in the single variable of an analog system without any additional complexity overhead. Physical performance here refers to analog photonic hardware and it is for example a measured performance with a proof-of-concept device or estimated performance based on simulations. The benchmark used for digital computing was TPUv4.

The information processing is carried out in the instruction engine 2, which may also be denoted as mathematical transformation unit, MTU, in analogy to the arithmetic logic unit, ALU, of a digital processor. The data is represented in the channels **15a, 15b, 15c, 15d, 15e, 15f, 15g** and the instructions developed can be implemented in one or more channels **15a, 15b, 15c, 15d, 15e, 15f, 15g** depending on the task by the control unit. The sketch of the flow of information and instructions is shown schematically in Fig. 3, where the different instructions are denoted as blocks **16a, 16b, 16c, 16d, 16e, 16f, 16g, 16h, 16i, 16j.**

An exemplary instruction set is given in the following table:

| Instruction | Meaning | Notes |
|---|---|---|
| ADC | Convert signal to digital values | |
| ADD | Add two signals | C= A + B |
| AMP | Amplify a signal | C= aA with a > 1 |
| ATT | Attenuate a signal | C= aA with 0 < a < 1 |
| CLR | Clear overload | |
| CONV | Convolution of two signals | C= A$_*$ B |
| COS | Multiply signal with cosine function | C= A cos (p with $\varphi \in \mathbb{R}$ |
| CUB | Cube amplitude of a signal | C= A$^3$ |
| DAC | Convert digital values to signal | |
| DELA | Delay signal while maintaining phase | |
| DFG | Subtract frequency of two signal amplitudes | $C_{\omega 1 - \omega 2} = f(A_{\omega 1}, B_{\omega 2})$. |
| DFT | Discrete Fourier transform of a set of signals | $C_j = FT(A_i)$ |
| DIF | Differentiate signal with respect to time | C = d/dt A |
| DIV | Divide two signals | C= A/B |
| DMUX | Distribute one signal into several channels, e.g. based on different frequencies | |
| HLT | Halt state | |
| INT | Interrupt a signal across a path | |
| INTR | Integrate signal with respect to time | C= ∫ A dt |
| LOAD | Load signal amplitude | |
| LPL | Discrete Laplace transformation of a set of signals | $C_j = L(A_i)$ |
| MIX | Mixing two signals based on an SU(2) rotation | $\begin{pmatrix} \sin\varphi & \cos\varphi \\ \cos\varphi & -\sin\varphi \end{pmatrix} \begin{pmatrix} A \\ B \end{pmatrix} \quad \varphi \in \mathbb{R}$ |
| MSA | Measure signal amplitude | \|A\| |
| MSP | Measure signal phase | arg(A) |
| MUL | Multiply two signals | C= AB |
| MUX | Select one or combine several signals in one channel | |
| PLL | Follow signal with fixed phase difference | A= B + exp(icp) with $\varphi \in \mathbb{R}$ |
| PUF | Generation of physically unclonable function with a set of signals | |
| RNG | Generation of a signal of random amplitude and phase | |
| ROT | Rotation of a signal in complex plane | C= A exp(icp) |
| RPT | Repeat instruction | |
| SHL | Shift signal onto the left channel | $C_{i+1} = A_j$ |
| SHR | Shift signal onto the right channel | $C_{i-1} = A_i$ |
| SIN | Multiply signal with sine function | C= A sin φ with $\varphi \in \mathbb{R}$ |
| SQR | Square amplitude of a signal | C= AA* |
| SAT | Apply saturating function, e.g. logistic function | |
| SFG | Sum frequency of two signal amplitudes | $C_{\omega 1 + \omega 2} = f(A_{\omega 1}, B_{\omega 2})$ |

(continued)

| MIX | Mixing two signals based on an SU(2) rotation | $\begin{pmatrix} \sin\varphi & \cos\varphi \\ \cos\varphi & -\sin\varphi \end{pmatrix} \begin{pmatrix} A \\ B \end{pmatrix}$ $\varphi \in \mathbb{R}$ |
|---|---|---|
| SPT | Split signal into two channels | $\begin{pmatrix} C \\ D \end{pmatrix} = \frac{1}{\sqrt{2}} \begin{pmatrix} 1 & i \\ i & 1 \end{pmatrix} \begin{pmatrix} A \\ 0 \end{pmatrix}$ |
| STO | Store signal amplitude | |
| SUB | Subtract two signals | C= A-B |
| TRIG | Wait for input signal with threshold amplitude | |

The invention enables a novel abstract machine architecture for analog computing based on wavefront propagation. The architecture, also denoted as wavefront analog computing, WAC, is based on the wave phenomena, which allows to implement a unique instruction set for efficient computation. WAC provides a unified computing architecture for energy-efficient and faster information processing in the analog domain for various applications. Information encoding in the wavefront format is used. By developing a novel instruction set based on analog processing on the wavefront information, WAC reduces resource requirements for complex mathematical operations, leading to more efficient and faster computations.

Information in WAC is encoded in the wavefront format. Starting with the simplest representation, information in this format has well-defined phases and can be considered as a set of continuous complex values, $A, B, C, \ldots \in \mathbb{C}$, to which it is referred to as signals. Complex numbers are the natural way to represent a plane wave, namely its amplitude $a = |A|$ and phase $\varphi\_A \equiv arg(A)$. A single unit or packet of wavefront analog information is denoted as wavefront analog bit or wabit. It can be presented as a complex number or its corresponding vector A

$$A = a \exp i\, \varphi_A \; \leftrightarrow \; \hat{A} \equiv \begin{pmatrix} a_1 \\ a_2 \end{pmatrix} = \begin{pmatrix} a_1 \cos\varphi_A \\ a \sin\varphi_A \end{pmatrix},$$

where $a_1$ and $a_2$ are the real and imaginary components of A, respectively.

A waveguide represents a physical transmission medium for signals, where it may be assumed that the wave propagates unidirectionally in time t along the z-axis:

$$A(z,t) = A\, exp(ikz - i\omega t) = a\, exp(ikz - i\omega t + \varphi\_A),$$

Where the two positive numbers $k$ and $\omega$ are the wavenumber and the frequency of the wavefront for a given dispersion law $\omega(k)$. Then, the number $A(z, t)$ is a basic representation of one wabit.

Generally speaking, multiple signals can travel in a single channel with different frequencies and/or polarization in the xy-plane. This multiplexity significantly increases the density of information in one channel and allows for the simultaneous processing of entire vectors or matrices of complex numbers. For a multi-frequency representation, one may assume propagation of waves with N different frequencies in each channel

$$\mathcal{A}(z,t) = \sum_{i=1}^{N-1} A_i \exp(ik_i z - i\omega_i t),$$

where $A_i$ and $k_i$ are the complex amplitudes and wavenumbers for corresponding frequencies $\omega_i$. The multi-frequency signal $\mathcal{A}$ can be projected onto an N-dimensional vector of wabits

$$\hat{\mathcal{A}} = \begin{pmatrix} A_0 \\ A_1 \\ \vdots \\ A_{N-1} \end{pmatrix}.$$

The wavefront can also have a multipolarization representation. Assuming two waves with orthogonal polarizations in each channel:

$$\mathbf{A}(z,t) = \left(A_x \mathbf{e}_x + A_y \mathbf{e}_y\right) \exp(ikz - i\omega t),$$

where $A_x$ and $A_y$ are the complex amplitudes for waves polarized along corresponding unit vectors $\mathbf{e}_x$ and $\mathbf{e}_y$, respectively, where the indices x and y represent the x- y-polarization, respectively. Such multipolarization signals may be represented by a two-component vector of trivial wabits or a quaternion:

$$\widehat{\mathbf{A}} = \begin{pmatrix} A_x \\ A_y \end{pmatrix} \in \mathbb{H}.$$

The complete representation involves utilizing both frequency and polarization multiplexing, offering the highest level of information density:

$$\mathfrak{A}(z,t) = \sum_{i,\alpha} A_{i\alpha}\, \boldsymbol{e}_\alpha \exp(ik_i z - i\omega_i t).$$

The complex amplitudes and wavenumbers for the corresponding waves are denoted by $A_{i\alpha}$ and $k_i$ respectively. The index $i = 0,1, ..., N - 1$ corresponds to different frequencies $\omega_i$, while the index $\alpha = x,\ y$ corresponds to different polarizations. One can then introduce an N-vector of quaternions or a $2 \times N$ matrix of wabits

$$\widehat{\mathfrak{A}} = \begin{pmatrix} \widehat{\mathbf{A}}_0 \\ \widehat{\mathbf{A}}_1 \\ \vdots \\ \widehat{\mathbf{A}}_{(N-1)} \end{pmatrix} = \begin{pmatrix} A_{0x} & A_{0y} \\ A_{1x} & A_{1y} \\ \vdots & \vdots \\ A_{N-1,x} & A_{N-1,y} \end{pmatrix}.$$

The possibility of real-number operations, may be assumed, for example, the measurement of physical quantities. Consequently, lowercase Latin or Greek symbols represent real numbers, while uppercase symbols represent complex numbers or tensors.

The system is initialized through multiple channels, each carrying an individual signal characterized by its phase and/or amplitude. As signals propagate through the system, they serve as inputs and outputs for the instructions. Different instructions are combined to implement the target algorithm, resulting in the final output signals.

One-channel operations in the WAC architecture are demonstrated in the following. Among them, a fundamental one is the phase shift

$$Y = X \exp i\phi.$$

The corresponding code is $Y = ROT(A, phi)$. The wabit $A$ is therefore rotated in the complex plane by an angle of $\phi$.

Two further operations that can be performed on the wabit amplitude are amplification and attenuation. Amplification increases the amplitude of the wabit, effectively boosting its signal strength. Attenuation, on the other hand, decreases the amplitude, reducing the signal strength:

$$Y = a\,X.$$

The corresponding codes are $Y = AMP(X, a)$ and $Y = ATT(X, a)$, respectively.

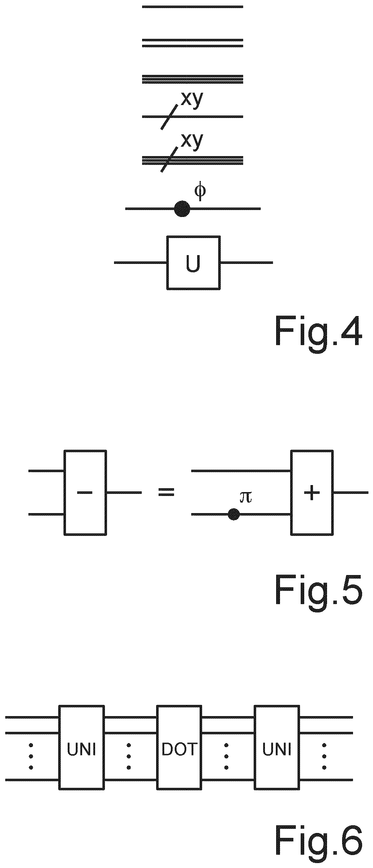

Scheme notations for non-multiplex-channel operations are demonstrated schematically in Fig. 4, wherein, from top to bottom, one has: analog channel, digital channel, multi-frequency channel, multipolarization channel, complex mixed channel, phase rotation, and gate U.

Beyond one-channel operations, more complex operations involve multiple input and/or output channels. This allows for intricate interactions between signals, such as implementing controlled operations where the signal of one-channel influences the manipulation of another, or combining two signals to obtain their sum:

$$Z = X + Y.$$

The corresponding code is $Y = ADD(X, Y)$.

Fig. 5 illustrates a subtraction gate, which can be realized by combining phase shift and addition operations:

$$Y' = Y \exp i\pi,$$

$$Z = X + Y'.$$

Another important multichannel operation is a 50:50 splitter, which divides the signal from one channel into two equal-amplitude signals:

$$Y_1 = \frac{X}{\sqrt{2}},$$

$$Y_2 = \frac{iX}{\sqrt{2}},$$

with corresponding codes $[Y1\ Y2] = SPT(X)$. The related 50:50 mixer is defined as

$$\begin{pmatrix} Y_1 \\ Y_2 \end{pmatrix} = \frac{1}{\sqrt{2}} \begin{pmatrix} 1 & i \\ i & 1 \end{pmatrix} \begin{pmatrix} X_1 \\ X_2 \end{pmatrix}$$

with the code $[Y1\ Y2] = FFM(X1, X2)$.

A more general SU(2) mixing of two signals can be constructed using combinations of basic instructions

$$\begin{pmatrix} Y_1 \\ Y_2 \end{pmatrix} = \frac{1}{2} \begin{pmatrix} e^{i\phi} & 0 \\ 0 & e^{i(\phi+\pi)} \end{pmatrix} \begin{pmatrix} 1 & i \\ i & 1 \end{pmatrix} \times \begin{pmatrix} 1 & 0 \\ 0 & e^{-2i\phi} \end{pmatrix} \begin{pmatrix} 1 & i \\ i & 1 \end{pmatrix} \begin{pmatrix} X_1 \\ X_2 \end{pmatrix} = \begin{pmatrix} \cos\phi & -\sin\phi \\ \sin\phi & \cos\phi \end{pmatrix} \begin{pmatrix} X_1 \\ X_2 \end{pmatrix}.$$

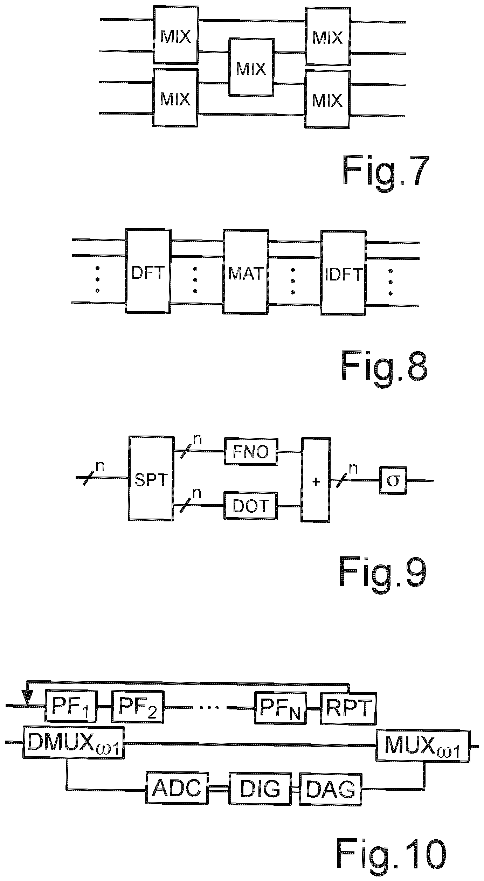

Also an efficient realization of linear algebraic transformations is possible with the WAC architecture. One important operation is a matrix-vector multiplication. Fig. 6 illustrates the algorithm to multiply an arbitrary matrix to an input vector based on singular value decomposition, where UNI is a unitary matrix transformation and DOT corresponds to a diagonal matrix operation. A unitary operation can be realized using the building block MIX instruction, two-channel special unitary transformation operations, based on either Reck or Clements proposal as shown in Fig. 7.

It has been shown that extending the neural network development to Fourier space for physics-informed development is an attractive alternative for finding efficient solutions to partial differential equations. An implementation of a Fourier neural operator, FNO, can be carried out on the proposed computing architecture in a procedure described in Fig. 8, where DFT and IDFT are the Fourier and inverse Fourier transform operation, respectively, and MAT is the vector-matrix operation as described previously. This operator can may be combined with normal weights as shown in Fig. 9 to obtain a Fourier layer for the neural network.

The WAC approach can also be used to implement a graph-optimizer algorithm to map graph problems in an analog system using frequency-multiplexing, as depicted in Fig. 10. Based on an optimization of a spin-based Ising model, each spin is represented as a wavefront analog input with different frequency and an arbitrary interaction between each input is set up. The emergent dynamics is described with a stochastic differential equation that maps to a graph problem. It can be shown that the evolution of the spin representation of a graph over a relatively small number of iterations results in an exact or near-optimal solution. The realization of this algorithm in the WAC approach rely, in particular, on two key functionalities: first, the frequency-multiplexed information encoding and second to utilize the control instructions to update the graph connections during every iteration. This is possible with a fast feedback mechanism in either the analog domain or by switching to digital signals in between.

The channel composes of N frequency bands $\omega_1, \ldots, \omega_N$, each of which carries a separate signal. The channel passes through complex partial filtering instructions for each individual frequency $\omega_n$, which is shown in the bottom part of Fig. 10. It comprises demultiplexing the particular frequency before detection, feedback and re-routing the information into the main channel again. After individual operations for partial filtering for each frequency, the information is ready for the next iteration. A possible physical implementation of the iterative optimization can be carried out in photonic hardware with the help of a cavity or a resonator with self-injection, for example.

References:

| | | |
|---|---|---|
| 1 | | computing system |
| 2 | | data processing device |
| 3 | | data encoding module |
| 4 | | input data |
| 5 | | processing module |
| 6 | | processing module |
| 7a, 7b | | processing modules |
| 8 | | host computer |
| 9 | | processor |
| 10 | | interface |
| 11 | | interface |
| 12 | | control unit |
| 13 | | memory |
| 14 | | local memory |
| 15a-15g | | channels |
| 16a-16j | | instructions |

**Claims**

1. A computing system (1) for continuous-value computing or partly continuous-value computing, wherein

   - the computing system (1) comprises a plurality of channels (15a, 15b, 15c, 15d, 15e, 15f, 15g), wherein each channel comprises a waveguide;
   - the computing system (1) comprises a data encoding module (3), which is configured to encode predefined input data (4) in a representation, which comprises a set of complex values;
   - the data encoding module (3) is configured to generate a respective signal for each of the plurality of channels (15a, 15b, 15c, 15d, 15e, 15f, 15g), which results in a set of signals, each signal of the set of signals comprising a wave with an amplitude spectrum and/or a frequency spectrum and/or a phase spectrum and/or a polarization spectrum depending on a respective subset of the set of complex values; and
   - the data encoding module (3) is configured to couple each of the set of signals into the waveguide of the respective channel; and
   - the computing system (1) comprises a plurality of processing modules (5, 6, 7a, 7b), which are coupled to the channels (15a, 15b, 15c, 15d, 15e, 15f, 15g) such that the set of signals is manipulated by the plurality of processing modules (5, 6, 7a, 7b) when propagating along the waveguides; and
   - the plurality of processing modules (5, 6, 7a, 7b) comprises a first module (5), which is configured to receive a first subset of at least one signal from at least one of the channels (15a, 15b, 15c, 15d, 15e, 15f, 15g) and to generate at least one manipulated signal, which is related to the first subset of at least one signal according to a predefined mathematical operation implemented by the first module (5); and
   - the plurality of processing modules (5, 6, 7a, 7b) comprises a second module (6), which is configured to receive a second subset of at least one signal from at least one of the channels (15a, 15b, 15c, 15d, 15e, 15f, 15g) and to control a further processing of the set of signals according to a predefined control operation, which is implemented by the second module (6).

2. Computing system (1) according to claim 1, wherein the computing system (1) comprises a photonic chip, which comprises the plurality of processing modules (5, 6, 7a, 7b), and each of the set of signals comprises a light wave.

3. Computing system (1) according to claim 2, wherein in order generate the at least one manipulated signal, the first module (5) is configured to modify the respective amplitude spectra of the first subset of at least one signal by carrying out an interferometric phase modulation of the respective amplitude spectra and/or an external electronic modulation.

4. Computing system (1) according to one of claims 2 or 3, wherein in order generate the at least one manipulated signal, the first module (5) is configured to modify the respective phase spectra of the first subset of at least one signal by adjusting an optical path length of a medium through which the first subset of at least one signal propagates.

5. Computing system (1) according to one of claims 2 to 4, wherein in order generate the at least one manipulated signal, the first module (5) is configured to modify a polarization of the first subset of at least one signal by providing a birefringent element through which the first subset of at least one signal propagates.

6. Computing system (1) according to claim 1, wherein for each of the set of signals, the respective wave comprises an electromagnetic radio-frequency wave or a pressure wave in a fluid medium or an acoustic wave or an ultrasonic wave.

7. Computing system (1) according to one of the preceding claims comprising a data decoding module, which is configured to generate output data (6) by decoding the set of signals manipulated by the plurality of processing modules (5, 6, 7a, 7b).

8. Computing system (1) according to one of the preceding claims, wherein the mathematical operation, which is implemented by the first module (5), comprises at least one arithmetic operation and/or at least one trigonometric operation and/or at least one linear transformation and/or at least one matrix multiplication and/or at least one logic operation.

9. Computing system (1) according to one of the preceding claims, wherein the mathematical operation, which is implemented by the first module (5), comprises a transformation that maps a function in a first domain to a function in a second domain.

10. Computing system (1) according to one of the preceding claims, wherein the control operation, which is implemented by the second module (6), comprises a routing or re-routing of at least a part of the set of signals.

11. Computing system (1) according to one of the preceding claims, wherein the control operation, which is implemented by the second module (6), comprises a jump operation and/or a halt operation and/or a delay operation and/or a data storage operation and/or a data retrieval operation.

12. Computing system (1) according to one of the preceding claims, wherein the first subset of at least one signal is identical to the second subset of at least one signal and the second module (6) is configured to

- determine a current number of times the first subset of at least one signal has already been manipulated by the first module (5); and
- to route the first subset of at least one signal to be manipulated by the first module (5) if the current number is less than predefined iteration number.

13. Computing system (1) according to one of the preceding claims, wherein the first module (5) is configured to

- generate a set of digital signals depending on the first subset of at least one signal; and
- carry out a computation according to the predefined mathematical operation based on the set of digital signals and store a result of the computation.

14. Computing system (1) according to claim 13, wherein the first module (5) is configured to manipulate the set of digital signals according to the predefined mathematical operation and convert the manipulated set of digital signals into a manipulated set of signals.

15. Method for continuous-value computing or partly continuous-value computing,
wherein

- a computing system (1) comprising a plurality of channels (15a, 15b, 15c, 15d, 15e, 15f, 15g) is provided, wherein each channel comprises a waveguide, and a plurality of processing modules (5, 6, 7a, 7b); and
- predefined input data (4) is encoded in a representation, which comprises a set of complex values and a respective signal is generated for each of the plurality of channels (15a, 15b, 15c, 15d, 15e, 15f, 15g), which results in a set of signals, each of the set of signals comprising a wave with an amplitude spectrum and/or a frequency spectrum and/or a phase spectrum and/or a polarization spectrum depending on a respective subset of the set of complex values; and

- each of the set of signals is coupled into the waveguide of the respective channel; and

- the set of signals is manipulated by the plurality of processing modules (5, 6, 7a, 7b) when propagating the set of signals along the waveguides; and

- a first subset of at least one signal from at least one of the channels (15a, 15b, 15c, 15d, 15e, 15f, 15g) is received by a first module (5) of the plurality of processing modules (5, 6, 7a, 7b) and at least one manipulated signal is generated by the first module (5), which is related to the first subset of at least one signal according to a predefined mathematical operation implemented by the first module (5); and

- a second subset of at least one signal from at least one of the channels (15a, 15b, 15c, 15d, 15e, 15f, 15g) is received by a second module (6) of the plurality of processing modules (5, 6, 7a, 7b) and a further processing of the set of signals is controlled by the second module (6) according to a predefined control operation, which is implemented by the second module (6).

Fig.1

Fig.2

Fig.3

Fig.4

Fig.5

Fig.6

Fig.7

Fig.8

Fig.9

Fig.10

Europäisches
Patentamt

European
Patent Office

Office européen
des brevets

**EUROPEAN SEARCH REPORT**

Application Number

EP 25 15 1728

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CHEN MINJIA ET AL: "I/O-efficient iterative matrix inversion with photonic integrated circuits", NATURE COMMUNICATIONS, vol. 15, no. 1, 15 July 2024 (2024-07-15), XP093290273, UK ISSN: 2041-1723, DOI: 10.1038/s41467-024-50302-3 * page 1 - page 11, left-hand column, paragraph 3 * | 1-15 | INV. G06E3/00 ADD. G06N3/067 |
| A | FELDMANN J ET AL: "Parallel convolutional processing using an integrated photonic tensor core", NATURE, vol. 589, no. 7840, 6 January 2021 (2021-01-06), pages 52-58, XP037330153, DOI: 10.1038/S41586-020-03070-1 * page 52 - page 58, left-hand column, paragraph 2 * * Appendix "Methods" * | 1-15 | |
| A | FU TINGZHAO ET AL: "Optical neural networks: progress and challenges", LIGHT: SCIENCE & APPLICATIONS, vol. 13, no. 1, 20 September 2024 (2024-09-20), XP093290068, UK ISSN: 2047-7538, DOI: 10.1038/s41377-024-01590-3 * page 1 - page 22 * | 1-15 | TECHNICAL FIELDS SEARCHED (IPC) G06E G06N |
| A | US 2024/193410 A1 (SHEN YICHEN [CN] ET AL) 13 June 2024 (2024-06-13) * abstract; claims 1-30; figures 1-41 * * paragraph [0005] - paragraph [0675] * | 1-15 | |

The present search report has been drawn up for all claims

| Place of search | Date of completion of the search | Examiner |
|---|---|---|
| The Hague | 27 June 2025 | Volkmer, Markus |

EPO FORM 1503 03.82 (P04C01)

## ANNEX TO THE EUROPEAN SEARCH REPORT
## ON EUROPEAN PATENT APPLICATION NO.

EP 25 15 1728

This annex lists the patent family members relating to the patent documents cited in  the above-mentioned European search report.
The members are as contained in the European Patent Office EDP file on
The European Patent Office is in no way liable for these particulars which are merely given for the purpose of information.

27-06-2025

| Patent document cited in search report | Publication date | Patent family member(s) | | Publication date |
|---|---|---|---|---|
| US 2024193410 A1 | 13-06-2024 | AU | 2019282632 A1 | 10-12-2020 |
| | | CA | 3101026 A1 | 12-12-2019 |
| | | CN | 112424796 A | 26-02-2021 |
| | | CN | 113159304 A | 23-07-2021 |
| | | CN | 113159305 A | 23-07-2021 |
| | | CN | 113159306 A | 23-07-2021 |
| | | CN | 113159307 A | 23-07-2021 |
| | | CN | 113159308 A | 23-07-2021 |
| | | EP | 3803710 A1 | 14-04-2021 |
| | | IL | 279181 A | 31-01-2021 |
| | | JP | 2021527287 A | 11-10-2021 |
| | | KR | 20210052430 A | 10-05-2021 |
| | | SG | 11202011824P A | 30-12-2020 |
| | | TW | 202001694 A | 01-01-2020 |
| | | TW | 202209034 A | 01-03-2022 |
| | | US | 2019370652 A1 | 05-12-2019 |
| | | US | 2020242472 A1 | 30-07-2020 |
| | | US | 2020250532 A1 | 06-08-2020 |
| | | US | 2020250533 A1 | 06-08-2020 |
| | | US | 2020250534 A1 | 06-08-2020 |
| | | US | 2022215257 A1 | 07-07-2022 |
| | | US | 2024193410 A1 | 13-06-2024 |
| | | US | 2024232604 A1 | 11-07-2024 |
| | | WO | 2019236591 A1 | 12-12-2019 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **W. R. CLEMENTS et al.** Optimal design for universal multiport interferometers. *Optica*, 2016, vol. 3 (12), 1460-1465

- **M. RECK et al.** Experimental realization of any discrete unitary operator. *Phys. Rev. Lett.*, vol. 73, 58